(19) Europäisches Patentamt / European Patent Office / Office européen des brevets

(11) **EP 2 150 372 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: 08758728.3

(22) Anmeldetag: **23.05.2008**

(51) Int Cl.:
***B23K 26/38*** (2006.01)

(86) Internationale Anmeldenummer:
**PCT/EP2008/004134**

(87) Internationale Veröffentlichungsnummer:
**WO 2008/145311 (04.12.2008 Gazette 2008/49)**

(54) **VERFAHREN ZUR MATERIALABTRAGUNG SOWIE VORRICHTUNG ZUR DURCHFÜHRUNG DES VERFAHRENS**

METHOD FOR MATERIAL REMOVAL AND DEVICE FOR CARRYING OUT SAID METHOD

PROCÉDÉ D'ENLÈVEMENT DE MATIÈRE ET DISPOSITIF POUR RÉALISER CE PROCÉDÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.05.2007 DE 102007024701**

(43) Veröffentlichungstag der Anmeldung:
**10.02.2010 Patentblatt 2010/06**

(73) Patentinhaber: **Fraunhofer-Gesellschaft zur Förderung der angewandten Forschung e.V.
80686 München (DE)**

(72) Erfinder:
• **SCHULZ, Wolfgang Prof. Dr.
52379 Langerwehe (DE)**
• **PETRING, Dirk
NL-6462 HE Kerkrade (NL)**
• **SCHNEIDER, Frank
52074 Aachen (DE)**
• **NIESSEN, Markus
52382 Niederzier (DE)**

(74) Vertreter: **Grimm, Ekkehard
Edith-Stein-Strasse 22
63075 Offenbach/Main (DE)**

(56) Entgegenhaltungen:
EP-A- 0 200 089  DE-A- 19 933 825
US-A- 5 286 947  US-A1- 2004 084 427

EP 2 150 372 B1

**Beschreibung**

Die vorliegende Erfindung betrifft ein Verfahren und eine Vorrichtung zur Materialabtragung über eine vorgegebene Abtragstiefe eines Werkstücks mittels Laserstrahl.

Eine solches Verfahren -bzw eine solche Vorrichtung ist in dem Oberbegriff des Anspruchs 1 -bzw des Anspruchs 14 beschrieben.

Das Laserschneiden ist ein etabliertes Verfahren zur Materialabtragung durch Schmelzen, bei dem die hergestellte Abtragstiefe die gesamte Dicke des Werkstücks erfasst. Beim Schneiden von Metallen ist die Abtragsfront schmelzflüssig und wird auch als Schneidfront bezeichnet. Unter den lasergestützten Fertigungsverfahren nimmt es in der industriellen Anwendung die führende Position ein. Aus Sicht des Anwenders ist die Steigerung der Produktivität des Verfahrens unter verbesserter Qualität eine anhaltende Forderung.

Es ist bekannt, dass für das Laserschneiden (im Bereich Makro-Anwendung für den Blechdickenbereich von 1mm bis 30 mm) ein Hochleistungs-$CO_2$-Laser ($10\mu$-Strahler) mit einer Wellenlänge der Strahlung von ca. 10 $\mu$m und mit einer Laserleistung von 1- 6 kW industriell eingesetzt werden. Darüber hinaus werden zum Laserschneiden auch Faserlaser und Scheibenlaser ($1\mu$-Strahler) mit einer Wellenlänge der Strahlung von ca. 1 $\mu$m und mit einer Laserleistung von 1- 8 kW eingesetzt. Gerade diese Strahlquellen bieten wirtschaftliche Vorteile und finden daher zunehmend Verwendung. Allerdings zeigt sich, dass die Schnittqualität am Werkstück z.B. von der verwendeten Strahlquelle (Faserlaser, Scheibenlaser $1\mu$-Strahler, Gaslaser $10\mu$-Strahler) und z.B. von der zu schneidenden Blechdicke und der Verfahrgeschwindigkeit abhängt.

Daher müssen folgende wesentlichen Merkmale beim Schmelzschneiden zuverlässig erreicht werden:

Produktivität des Prozesses

Kürzere Bearbeitungszeiten und das qualitativ hochwertige Abtragen oder Trennen größerer Materialdicken sind grundlegende Forderungen. Daher werden zunehmend größere Laserleistung und Anlagen mit hochwertigen Antrieben in der Fertigung eingeführt. Die Entwicklung zielt darauf, die technischen Begrenzungen der Verfahrensführung zu erweitern.

Qualität der Schnittkante

Ebenheit und Rechtwinkligkeit sind neben Rauheit und anhaftendem Bart sowie der Bildung von Oxidschichten wesentliche Qualitätsmerkmale der Schnittkante. Die Prozesskette Schneiden-Schweißen ist ein Beispiel, an dem zu erkennen ist, welche Bedeutung die Qualität der Schnittkante für die Vorbereitung des Fügespalts hat. Um schlanke Schweißnähte - die keine Nacharbeit durch Schleifen und Richten erfordern - mit dem Laser herstellen zu können, ist ein Zuschnitt der zu fügenden Bauteile mit ebenen, rechtwinkligen sowie glatten, bart- und oxidfreien Schnittkanten erwünscht. Daher sind die folgenden Unterpunkte zu berücksichtigen:

- Auf der Schnittkante entstehen mit zunehmender Blechdicke immer grobere Riefen, die sich insbesondere im unteren Teil der Schnittkante (bzw. Abtragsfuge) zeigen. Dieses Problem tritt noch stärker bei großen Blechdicken auf.

- Insbesondere bei kleiner und großer Vorschubgeschwindigkeit löst die Schmelze nicht vollständig von der Unterkante ab. Die anhaftende und dann erstarrende Schmelze bildet den unerwünschten Bart. Die Mechanismen der Entstehung eines solchen Barts sind nur zu einem Teil verstanden.

- Die Bildung von Rissen und Poren in der Schweißnaht kann durch oxidierte Fügekanten verursacht werden, wie sie beim Brennschneiden entstehen. Daher wird das Schmelzschneiden mit inertem Schneidgas eingesetzt, um oxidfreie Schnittkanten zu erhalten.

Die bekannten Techniken zum Schneiden von Metallen mit Laserstrahlung werden durch die beteiligten Mechanismen zur Einbringung der Schneidenergie eingeteilt in

- Laserstrahlschneiden mit reaktivem Schneidgasstrahl
- Laserstrahlschneiden mit inertem Schneidgasstrahl

Beim Laserstrahlschneiden mit reaktivem Schneidgasstrahl (z.B. Sauerstoff, Pressluft) stellen der Laserstrahl und eine exotherme chemische Reaktion gemeinsam die Schneidenergie zur Verfügung. Techniken zum Laserstrahlschneiden mit reaktivem Schneidgasstrahl werden weiter dadurch unterschieden, ob der Laserstrahl dominant in der Schneidfuge wirkt (Laserstrahlbrennschneiden) oder zusätzlich auf der Oberseite des Bleches (abbrandstabilisiertes Laserstrahlbrennschneiden) eingestrahlt wird.

Beim Laserstrahlschneiden mit inertem Schneidgasstrahl (z.B. Stickstoff) bringt der Laserstrahl die Schneidenergie auf. Das Laserstrahlschneiden mit inertem Schneidgasstrahl wird durch die unterschiedlichen Mechanismen zum Beschleunigen/Austreiben der Schmelze weiter unterschieden. Zusätzlich zur Wirkung des Schneidgasstrahls kann die Verdampfung von schmelzflüssigem Material auftreten und die Schmelze beschleunigen. Mit zunehmender Vorschubgeschwindigkeit nimmt die antreibende Wirkung aufgrund der Verdampfung zu.

Beim Laserschneiden mit inertem Schneidgasstrahl werden drei Verfahrensvarianten unterschieden:

Laserstrahlschmelzschneiden:

Die Temperatur an der Oberfläche der Schmelze bleibt unterhalb der Verdampfungstemperatur und die Schmelze wird nur durch den Schneidgasstrahl ausgetrieben. Diese Verfahrensvariante wird im Bereich von Fein-, Mittel- und Dickblech industriell eingesetzt. Die Schmelze strömt dominant am Scheitel der Schneidfront - vor der Laserstrahlachse - aus. Qualitätsbegrenzend sind die Riefen- und Bartbildung.

**-** Schnellschneiden:

Die Verdampfungstemperatur wird auf dem unteren Teil der Schneidfront überschritten und die austreibende Wirkung aufgrund des Schneidgases und des verdampfenden Materials sind vergleichbar. Die Schmelze strömt dominant im vorderen Bereich der Schneidfront rechts und links neben der Laserstrahlachse - aus. Diese Verfahrensvariante kann im Bereich von Fein- und Mittelblech angewandt werden. Qualitätsbegrenzend sind die Riefen- und Bartbildung.

Hochgeschwindigkeitsschneiden:

Die Verdampfungstemperatur wird nahezu auf der gesamten Schneidfront überschritten. Die antreibende Wirkung aufgrund der Verdampfung ist dominant Die Schmelze strömt um die Laserstrahlachse herum und verschließt einen Teil der Schnittfuge im Nachlauf des Laserstrahles und wird dort durch die Wirkung des Schneidgases ausgetrieben. Diese Verfahrensvariante wird für Feinbleche angewandt.

Die DE 199 33 825 A beschreibt eine Laserbearbeitungsvorrichtung, mit der Schweißverfahren durchgeführt werden, bei denen Teile miteinander verbunden werden. Die Laserbearbeitungsvorrichtung umfasst eine Mehrzahl von Laserresonatoren, von denen jeweilige Laserstrahlen ausgehen. Diese Laserstrahlen werden durch eine Strahlmischeinrichtung, bei der es sich um einen Spiegel handelt, zusammengeführt. Um diesen Laserstrahl entlang einer Schweißnaht zu führen, wird eine Strahllenkeinrichtung eingesetzt. Weiterhin ist eine Einrichtung zum Variieren der Brennpunktposition vorgesehen, um den Brennpunkt in Richtung der Laserstrahlachse zu verschieben, damit der Geometrie der zu erstellenden Schweißnaht in y-Richtung gefolgt werden kann. Das Werkstück kann darüber hinaus, auf einer Bearbeitungsbühne befestigt, in x-y-Richtung verschoben werden.

Die US 5 286 947 A beschreibt eine Vorrichtung und ein Verfahren zur Überwachung des Materialabtrags von einem Werkstück. Mit dem angegebenen Verfahren sowie der entsprechenden Vorrichtung soll im Wesentlichen die Effizienz des Materialabtrags verbessert werden. Die Vorrichtung dient zum Überwachen des Materialabtrags von einem Werkstück durch einen Energiestrahl. Die Vorrichtung umfasst einen Detektor zum Erfassen optischer Emissionen, die durch das Entfernen von Material von dem Werkstück auftreten, und Einrichtungen, um in Realzeit die Menge des Materials zu bestimmen, das während der Materialbearbeitung entfernt wird. Verfahrensgemäß wird der Materialbearbeitungsvorgang in Abhängigkeit der Menge des Materialabtrags beeinflusst. In dem Dokument wird die Möglichkeit angesprochen, den Einfallswinkel der Laserstrahlung zu verändern; dies dient aber nur dazu, einen schnellen und großen Materialabtrag und somit ein schnelles Schneiden zu erzielen.

Die EP 0 200 089 A beschreibt ein Verfahren zum Bilden von schmalen, metallfreien Streifen in der Metallschicht von Kunststofffolien.

Die US 2004/084427 A1 betrifft Vorrichtungen und Verfahren zum Bearbeiten eines Substrats mittels Laserstrahlung. Die Vorrichtung umfasst eine Laserstrahlquelle und ein optisches System, das ein Bild auf dem Substrat bildet. Das Bild wird relativ zu der Substratfläche gescannt, so dass jeder Punkt in dem Bearbeitungsbereich einen Strahlungsimpuls aufnimmt, der ausreichend ist, um diesen Bereich thermisch zu bearbeiten.

Der vorliegenden Erfindung liegt die Aufgabe zugrunde, ein Verfahren zur Materialabtragung über eine vorgegebene Abtragstiefe anzugeben, mit dem die Riefen- und Bartbildung minimierbar ist und die Laserstrahlung während des Abtrags optimal geformt wird. Nach dem Stand der Technik ist bekannt, dass die unsachgemäße Einstellung von Abtragsparametem (bzw. Schneidparametern) eine unnötig starke Zunahme der Riefenamplitude mit der Abtragstiefe bewirken kann. Beispiele sind ein zu kleiner Gasdruck, eine zu schmale Abtragsfuge (z.B. beim Feinschneiden) oder eine zu große Verfahrgeschwindigkeit. Die zentrale Aufgabe besteht darin, die Bildung von Riefen mit unnötig großer Amplitude zu vermeiden, die selbst nach sachgemäßer Anwendung der bekannten Maßnahmen nicht mehr verkleinert werden kann. Die Aufgabenstellung wird durch eine überraschende Beobachtung nach dem Stand der Technik begründet: bei der Anwendung von ausgewählten Strahlquellen zum Laserschneiden, wie z.B. dem $1\mu$-Strahler (Faserlaser, Scheibenlaser etc.), oder beim Schneiden großer Werkstückdicken treten große Riefenamplituden auf, die mit den bekannten Maßnahmen nicht vermieden werden können. Auch der bekannte Stand der Forschung gibt keinen erklärenden Hinweis darauf, welche Ursachen bzw. welcher Mechanismus die unerwünscht großen Riefenamplituden bewirkt.

Aus experimenteller Beobachtungen ist bekannt geworden, dass die unerwünschten, heute nicht vermeidbaren Riefen, typischerweise in einem Bereich, ab einer bestimmten Abtragstiefe (bzw. Schnitttiefe) von kleinen Werten der Riefenamplitude zu deutlich größeren Werten wechseln kann. Dieser Wechsel kann in einem Bereich der Schnitttiefe auftreten, der im Vergleich zur Dicke des Werkstücks klein ist. Dieser Bereich kann während eines Schnittes in wechseinden Tiefen auf der Schnittkante (bzw. Abtragskante) auftreten.

Die zu lösende Aufgabe besteht daher darin, Verfahren anzugeben, mit denen die Auswirkungen dieses noch nicht bekannten Mechanismus zur Riefenbildung unterdrückt oder ganz vermieden werden können. Eine weitere Aufgabe besteht darin, die Parameter anzugeben, die den noch nicht bekannten Wechsel von kleinen zu großen Werten der Riefenamplitude ab einer bestimmten Abtragstiefe (bzw. Schnitttiefe) bewirken.

Weiterhin soll eine Vorrichtung zur Durchführung eines solchen Verfahrens angegeben werden.

Diese Aufgabe wird gelöst mit einem Verfahren zur Materialabtragung über eine vorgegebene Abtragstiefe eines Werkstücks mittels Laserstrahl, der aus einem oder mehreren Teilstrahlen besteht, die jeweils eine definierte Strahlachse aufweisen, wobei die Achse des Laserstrahls oder die jeweiligen Achsen der Teilstrahlen gemeinsam entlang einer Abtragslinie mit einer vorgegebenen Verfahrgeschwindigkeit geführt wird und der Laserstrahl eine vorgegebene räumliche einen Poyntingvektor S definierende Energiestromdichte, mit einem Betrag $I_0f(x)$ und einer Richtung s, aufweist, wobei die räumliche Energiestromdichte eine Abtragsfront, mit einem Scheitel als dem in Abtragsrichtung am weitesten fortgeschrittenen Teil der Abtragsfront, erzeugt, mit der eine Abtragskante erzeugt wird, das dadurch gekennzeichnet ist, dass die jeweiligen Einfallswinkel $\alpha$ der Abtragsfront, die von den Normalenvektoren n auf der Abtragsfront und den Richtungen s der Poyntingvektoren eingeschlossen sind, so eingestellt werden, dass sie einen Maximalwert $\alpha_{max}$ in einem vordefinierten Bereich um einen Scheitel der Abtragsfront nicht übersteigen, wobei das Überschreiten des Maximalwerts dadurch erfasst wird, dass ein Wechsel von kleiner Riefenamplitude in einem oberen Teil der Abtragskante zu einer großen Riefenampiltude in einem unteren Teil der Abtragskante auftritt, wobei Einrichtungen vorgesehen sind, um den Wechsel von einer kleinen Riefenamplitude in einem oberen Teil der Abtragskante zu einer großen Riefenamplitude in einem unteren Teil der Abtragskante zu erfassen, wobei der Einfallswinkel gegeben ist durch

$$\alpha = \alpha[\underline{s} \cdot \underline{n})$$

mit $\underline{s}$ = Einheitsvektor in Richtung des Poyntingvektors $\underline{S}$ , $|s| = 1$
$|S|$ = Betrag des Poyntingvektors
$\underline{n}$ = Normalenvektor, $|n| = 1$
und wobei weiterhin $\alpha_{max} > \alpha + \Delta\alpha(t)$ gilt und hierbei $\Delta\alpha$ (t) die zeitlichen technisch unvermeidbaren Schwankungen des Einfallswinkels $\alpha$ angibt.

Die Aufgabe wird auch gelöst durch eine Vorrichtung zur Durchführung des Verfahrens zur Materialabtragung mit einer einen Laserstrahl, der aus einem oder mehreren Teilstrahlen besteht, erzeugenden Einrichtung, wobei der Laserstrahl oder die jeweiligen Teilstrahlen eine definierte Strahlachse aufweisen, und mit Einrichtungen, mittels denen die Achse des Laserstrahls oder die jeweiligen Strahlachsen gemeinsam entlang der Abtragslinie mit einer vorgegebenen Verfahrgeschwindigkeit derart führbar sind, dass die räumliche Energiestromdichte eine Abtragsfront, mit einem Scheitel als dem in Abtragsrichtung am weitesten fortgeschrittenen Teil der Abtragsfront, erzeugt, mit der eine Abtragskante hergestellt wird, und der Laserstrahl so eingestellt ist, dass er eine vorgegebene räumliche einen Poyntingvektor s definierende Energiestromdichte aufweist, die dadurch gekennzeichnet ist, dass Einrichtungen vorgesehen sind, mit denen die jeweiligen Einfallswinkel $\alpha$ der Abtragsfront, die von den normalen Vektoren n auf der Abtragsfront und den Poyntingvektoren s eingeschlossen sind, so einstellbar sind, dass sie einen Maximatwert in einem vordefinierten Bereich um einen Scheitel der Abtragsfront nicht übersteigen, wobei der Einfallswinkel gegeben ist durch

$$\alpha = \alpha[\underline{s} \cdot \underline{n})$$

mit $\underline{s}$ = Einheitsvektor in Richtung des Poyntingvektors $\underline{S}$ , $|\underline{s}| = 1$
$|S|$ = Betrag des Poyntingvektors
$\underline{n}$ = Normalenvektor, $|\underline{n}| = 1$
und wobei weiterhin $\alpha_{max} > \alpha + \Delta\alpha(t)$ gilt und hierbei $\Delta\alpha$ (t) die zeitlichen technisch unvermeidbaren Schwankungen des Einfallswinkels $\alpha$ angibt.

Eine bevorzugte verfahrensgemäße Maßnahme liegt darin, dass die Riefenamplitude in dem unteren Teil der Abtragsfuge in zunehmendem Maße verkleinert wird, indem die jeweiligen Einfallswinkel $\alpha$ in einem Bereich mit einer größeren Entfernung vom Scheitel der Abtragsfront den Maximalwert $\alpha_{max}$ nicht übersteigen.

Bevorzugt werden bei den verfahrensgemäßen Maßnahmen die Einfallswinkel dadurch eingestellt, dass der Poyntingvektor S laserintern oder laserextern mit einer strahlformenden Optik gedreht wird. Eine laserinteme Einstellung des Poyntingvektors S ist dann heranzuziehen, wenn z.B. die Schneidaufgabe einen zu kleinen Arbeitsabstand zwischen der strahlformenden Optik und dem Werkstück erfordert und deshalb eine laserexterne Vorrichtung nicht vorteilhaft anwendbar ist, während eine laserexterne Drehung dann anzuwenden ist, wenn z.B. häufig wechselnde Schneidaufgaben mit einer Vorrichtung zu erledigen sind und eine stets anzupassende Einstellung von Parametern einer laserinternen Optik zu aufwendig ist oder wenn die Funktion des Lasers (z.B. dessen zeitliche Stabilität) beeinträchtigt wird oder wenn die Belastung der zusätzlichen oder modifizierten optischen Komponenten durch die Laserstrahlung bei der laserinternen Drehung zu groß ist.

Die Einfallswinkel a können dadurch eingestellt werden, dass mit einer laserintern oder laserextern strahlformenden Optik der Poyntingvektor S auf der Abtragsfront gedreht wird und dass als strahlformende Optik gasförmige und/oder fluide Medien verwendet werden. Eine alternative Möglichkeit besteht darin, dass die Einstellung der Einfallswinkel $\alpha$ dadurch erfolgt, dass mit einer laserintern oder laserextern strahlformenden Optik die Wirkung erzielt wird, dass der Poyntingvektor S auf der Abtragsfront gedreht wird und dass als strahlformende Optik diffraktive, refraktive, reflektierende oder/und streuende Optiken verwendet werden.

Die Einfallswinkel $\alpha$ können auch dadurch eingestellt werden, dass die Verteilung des Betrages $I_0 f(x)$ der räumlich variierenden Energiestromdichte mit größerem Durchmesser eingestellt wird. Ein Beispiel zum Vergrößern des Durchmessers ist das Einstellen einer Fokuslage oberhalb des Werkstücks oder unterhalb.

Die Erfinder haben erkannt, dass beim Abtragen, d.h. während die Abtragsfuge entsteht, eine innere Instabilität für die Bewegung der Abtragsfront existiert, die zu Schwankungen der Breite der Abtragsfuge und zu den Riefen im Bereich der Abtragskante (Schnittkante) an dem Werkstück führen.

Daher wird mit den vorstehend angegebenen Maßgaben eine Kontrollgröße

$$\frac{dq_A}{dx} = g(\alpha)$$

mit

$$q_A = \mu A(\mu) I_0 f(x), \quad \mu = \cos(\alpha)$$

angegeben, wobei $\alpha_{max} = \alpha$ den Übergang zur Instabilität angibt. An den Orten auf der Abtragsfront, wo die Einfallswinkel $\alpha$ einen maximalen Wert $\alpha_{max} < \alpha$ übersteigen, ist der Abtragsprozess instabil. Der Kosinus $\mu$ des Einfallwinkels $\alpha$ ist das Skalarprodukt

$$\mu = s(x) \cdot n(x)$$

aus dem Einheitsvektor in Richtung s des Poyntingvektors und dem Normalenvektor n auf der Abtragsfront. Der Absorptionsgrad der Laserstrahlung auf der Abtragsfront hängt von dem Einfallswinkel $\alpha$ und wird mit $A(\mu)$ bezeichnet. Die Intensität, das ist der Betrag des zeitlich gemittelten Poyntingvektors S, der Laserstrahlung wird durch einen Maximalwert $I_0$ und eine räumliche Verteilung $f(x)$ ($0 < f < 1$) angegeben. Die Größe x bezeichnet den Abstand der durch Schwankungen gestörten Abtragsfront von ihrem ungestörten Wert $x=0$. Insbesondere hängt die geometrische Form der Abtragsfront und damit der Normalenvektor n auf der Abtragsfront von einem

vorgegebenen Betrag $I_0 f(x)$ des Poyntingvektors S ab.

Erfindungsgemäß wird daher der Einfallswinkel zeitlich ($\alpha(t)$) so eingestellt, dass $\alpha_{max} > \alpha(t)$ für alle Zeiten t gilt. Hierdurch ergeben sich keine groben Riefen aus der Anfachung (bzw. Instabilität) und die Riefenamplitude nimmt den minimal möglichen Wert an, der nur nach einer unvermeidbaren Schwankung der fest eingestellten Abtragsparameter verursacht wird. Als Konditionierungsmaßnahme wird ein Wechsel - der auch als sprunghafter Anstieg auftreten kann - der Riefenamplitude im Bereich der Abtragsfront herangezogen mit $I_1 < d$, wobei $z = I_1$ die Tiefe des Übergangs zur Anfachung von Riefen kleiner Amplitude aufgrund unvermeidbarer Schwankungen zu Riefen großer Amplitude aufgrund der Anfachung (bzw. Instabilität) angibt und d die Abtragstiefe von der Oberseite des Werkstücks aus (maximal die Dicke des Werkstücks) angibt, so dass gilt: $\alpha_{max} > \alpha$.

Der Einfallswinkel $\alpha$, wie er vorstehend angegeben ist, ist gegeben durch:

$$\alpha = \alpha[\underline{s} \cdot \underline{n}])$$

mit $\underline{s}$ = Einheitsvektor in Richtung des Poyntingvektors $\underline{S}$ , $|\underline{s}| = 1$
$|\underline{S}|$ = Betrag des Poyntingvektors
$\underline{n}$ = Normalenvektor, $|\underline{n}| = 1$

Nach der Erfindung werden für das Einstellen der Einfallswinkel folgende Punkte berücksichtigt:

- es wird ein vollständiger 2-dimensionaler Phasenraum ausgenutzt, der durch Betrag und Richtung der Poyntingvektoren in dem Laserstrahl aufgespannt wird
- es werden Betrag und Richtung der Poyntingvektoren unabhängig voneinander eingestellt
- es werden bewusst große Werte von $M^2$ eingestellt, also $M^2 > 1$, wobei $M^2 = 1$ die physikalische Grenze für die beste Qualität der Laserstrahlung kennzeichnet
- es werden bewusst große Werte des Strahlradius $w_0$ eingestellt,
- es wird bewusst ein großer Betrag der Aberration eingestellt,

da erkannt wurde, dass mit diesen Maßnahmen die Werte für den Einfallswinkel verkleinert werden.

Im Gegensatz dazu werden nach dem Stand der Technik Variationen/Änderungen der Verfahrensparameter nur in einem näherungsweise 1-dimensionalen Phasenraum durchgeführt, beispielsweise Variationen der Schneidparameter oder Variationen der Parameter der Optik, mit der Maßgabe, dass der physikalische Idealwert $M^2 = 1$ für die Qualität der Laserstrahlung möglichst gut erreicht werden soll und der Strahlradius $w_0$ klein sein soll und darüber hinaus keine Aberration vor-

liegen soll. Die Maßgabe $M^2 = 1$ stellt einen festen Zusammenhang von Betrag und Richtung des Poyntingvektors für ein räumlich dreidimensionales Strahlungsfeld dar. Wird die Maßgabe etwa wegen technischer Unvollkommenheit nicht nur näherungsweise, sondern ideal ausgeführt, dann bewirkt sie eine Einschränkung auf einen 1-dimensionalen Phasenraum.

Soweit in diesen Unterlagen von "Anlage" bzw. "anlagenspezifischen" Eigenschaften gesprochen wird, so sind darunter die Gesamtheit der Komponenten zur Durchführung des Verfahrens bzw. die spezifischen Eigenschaften der Gesamtheit von Komponenten zu verstehen, die z.B. eine Strahlquelle, eine Handhabungsmaschine und Komponenten zur Gasstrahlführung umfassen. Bei einem zeitlichen Auftreten von anlagenspezifischen Schwankungen der Einfallswinkel $\alpha$ sollten die verursachenden Schwankungsamplituden der Abtragsparameter verkleinert werden, so dass gilt

$$\alpha_{max} > \alpha + \Delta\alpha(t)$$

Als Abtragsparameter werden Laserleistung, Intensitätsverteilung, Gasdruck und/oder Richtung und Betrag der Verfahrgeschwindigkeit des Laserstrahls bzw. dessen Achse berücksichtigt. Auch bei an der Anlage fest eingestellten Werten der Abtragsparameter treten stets technisch unvermeidbare Schwankungen dieser Werte auf.

Die vorstehende Vorschrift $\alpha_{max} > \alpha + \Delta\alpha(t)$ sagt aus, dass technisch unvermeidbare Schwankungen der fest eingestellten Werte für die Abtragsparameter so groß sind, dass sie zu Schwankungen $\Delta\alpha$ des eingestellten Einfallswinkels $\alpha$ führen und dadurch der zulässige Wert $\alpha_{max}$ des Einfallswinkels $a(t) = \alpha + \Delta\alpha(t)$ während des Schneidens durch die zu große Schwankungsbreite $\Delta\alpha(t)$ überschritten wird; dadurch wird der maximale Einfallswinkel $\alpha_{max}$ überschritten und die Anfachung wird erzeugt.

Soweit in diesen Unterlagen von "Anfachung" gesprochen wird, so ist darunter die Auswirkung zu großer Einfallswinkel, die eine Instabilität in Form einer wellenförmigen Bewegung der Abtragsfront mit zunehmender Wellenamplitude bewirken, zu verstehen.

Es hat sich gezeigt, dass mit dem erfindungsgemäßen Verfahren die herkömmlichen Techniken insbesondere zum Abtragen von Metallen von einem Werkstück bis hin zum vollständigen Trennen von Werkstücken (Schneiden) mit Laserstrahlung so verbessert werden, dass ein Qualitätsschnitt mit kleinen Riefenamplituden und im Wesentlichen ohne Bartbildung beim Schneiden größerer Blechdicken und mit größeren Schneidegeschwindigkeiten erreicht werden kann.

Bei bisher bekannten Verfahren ohne bewusst eingestellte Modulation werden nämlich die Parameter zum Abtragen aus Erfahrungen zur zeitlich gemittelten Energiebilanz an der Schneidfront abgeleitet. Die Riefen sind nahezu räumlich-periodische Schwankungen des Profils der Schnittkante und Folge dynamischer Vorgänge beim Schneiden. Demnach ist eine dynamische Aufgabenstellung zu lösen.

Alle bekannten Verfahren mit Modulation der Schneidparameter führen nicht zur gewünschten Verkleinerung von Riefenamplituden; sie zielen dominant auf eine Vermeidung von Bart bei kleinen Verfahrgeschwindigkeiten, wie sie beim Schneiden von Konturen auftreten, eine größere Schneidgeschwindigkeit und eine größere schneidbare Materialdicke bei unveränderter Qualität der Schnittkante.

Mit der Erfindung werden Parameter angegeben, mit denen die axial laufenden Wellen aufgrund unvermeidbarer Schwankungen der Schneidparameter gedämpft und nicht angefacht werden, also eine neue - bisher noch nicht gelöste - dynamische Aufgabenstellung gelöst wird.

Die Erfindung nutzt die Erkenntnis aus, dass Riefen erzeugt werden, weil Abtragsschwankungen aufgrund unvermeidbarer Schwankungen der Parameter des Schneidens entweder durch eine innere Instabilität angefacht werden oder weil die unvermeidbaren Schwankungen in einem Frequenzintervall liegen, das zu besonders großen Amplituden von Abtragsschwankungen führt, und die Amplituden der unvermeidbaren Schwankungen zu groß sind. Diese innere Instabilität ist bis heute unbekannt und wurde durch die Erfinder erstmals als relevante Größe für die Riefenbildung zugeordnet und für die Verbesserung der Qualität des Abtragens bzw. des Schneidens genutzt.

Die Erfinder haben somit erkannt, dass der Übergang von gedämpften zu angefachten Abtragsschwankungen aufgrund äußerer Schwankungen insbesondere von dem lokalen Einfallswinkel a der Strahlung, dem Maximalwert $I_0$ der Intensität im Laserstrahl und der räumlichen Verteilung $f(x)$ der Intensität im Laserstrahl abhängen.

Der Übergang zu angefachten Abtragsschwankungen tritt dann auf, wenn der Einfallswinkel $\alpha$ der Strahlung zu groß eingestellt wird, der Maximalwert $I_0$ der Intensität im Laserstrahl zu groß eingestellt wird und die Verteilung $f(x)$ in Richtung x senkrecht zur Absorptions- bzw. Schneidfront zu stark abfallend eingestellt wird, nämlich $df(x)/dx < c < 0$.

Der in Rede stehende Einfallswinkel $\alpha$ der Abtragsfront, der von dem jeweiligen Normalenvektor n auf der Abtragsfront und der Richtung s des entsprechenden Poyntingvektors eingeschlossen ist, kann dadurch eingestellt werden, dass eine Aberration der optischen Abbildung in der Optik vergrößert wird.

Die Aberration in der Optik kann durch refraktive (z.B. Linsen), reflektierende (z.B. Spiegel), diffraktive (z.B. Blenden) und streuende (z.B. Partikel) Optiken vergrößert werden. Refraktive Optiken werden für kleine Laserleistung angewandt (z.B. <6kW beim $CO_2$ Laser). Reflektierende Optiken werden vorteilhaft zur Strahlformung von großer Laserleistung angewandt, wenn die Belastung refraktiver Optiken durch Erwärmung aufgrund von Absorption zu unerwünschten Aberrationen oder sogar zur Zerstörung der optischen Elemente führen. Diffraktive Optiken werden vorteilhaft angewandt, wenn große Ablenkwinkel erzeugt werden sollen oder wenn nur Randbereiche der Laserstrahlung geformt werden sollen.

Die Aberration in der Optik kann dadurch vergrößert werden, dass die Aberration in der Optik erreicht wird, indem eine Kombination aus einer Konkav- und Konvexlinse eingesetzt wird. Eine solche Optik ist dahingehend vorteilhaft, dass besonders große Werte für den Betrag der Aberration eingestellt werden können. Mit der die Aberration erzeugenden Kombination der Linsen kann gleichzeitig die Kollimation und/oder die Fokussierung der Laserstrahlung durchgeführt werden, so dass der konstruktive Aufwand gering gehalten werden kann.

Die Aberration in der Optik kann auch dadurch vergrößert werden, dass optische Elemente mit asphärischen Flächen eingesetzt werden. Hierbei können die optischen Elemente als Axikon oder als Fresnellinse ausgeführt werden. Ein Axikon ist dann zu bevorzugen, wenn eine ringförmige Verteilung f(x) mit im Bereich der Abtragsfront ansteigenden Werten eingestellt werden soll, während eine Fresnellinse einen Vorteil dann bietet, wenn gro-β e Ablenkwinkel erreicht werden sollen.

Die Aberration in der Optik kann auch durch laserinterne oder laserexterne Gradientenindexoptiken, die z.B. als Gradientenindexfasern oder Gradientenindexlinsen ausgeführt werden können, erzeugt werden.

Damit der Betrag der Aberration einstellbar ist, wird die Optik als adaptive Optik ausgeführt.

Unter Vorgabe, dass die Laserstrahlung einen Betrag $I_0$ f(x) der räumlich variierenden Energiestromdichte mit einem Maximalwert $I_0$ und einer Verteilung f (x) (0<f<1) hat, wird der Einfallswinkel eingestellt, indem die Breite der Verteilung f(x) mit der vordefinierten Abtragstiefe monoton ansteigend eingestellt wird.

Darüber hinaus sollen die Einfallswinkel entlang des Scheitels auf der Abtragsfront eingestellt werden, indem mit einer Strahlformung innerhalb oder außerhalb eines Laserresonators ein elliptischer Strahlquerschnitt erzeugt wird, wobei die große Halbachse in die Richtung der Abtragslinie zeigt, wobei der Scheitel der Abtragsfront als der in Abtragsrichtung am weitesten fortgeschrittene Teil der Abtragsfront definiert ist. Mit dieser Maßnahme wird ausgenutzt, dass die Anfachung nur in einer Umgebung des Scheitels vermieden wird, wo die größten Wellenamplituden durch die Anfachung auftreten, und dass die Anfachung außerhalb dieser Umgebung, wo kleinere Wellenamplituden durch die Anfachung auftreten, bewusst zugelassen wird.

Unter Vorgabe, dass die Laserstrahlung einen Betrag $I_0$ f(x) der räumlich variierenden Energiestromdichte mit einem Maximalwert $I_0$ und einer Verteilung f (x) (0<f<1) hat, wird der Einfallswinkel eingestellt, indem durch eine strahlformende Optik innerhalb oder außerhalb eines Laserresonators die Randbereiche der Verteilung f(x), wo kleine Werte räumlich variierender Energiestromdichte vorlieben, so stark unterdrückt (ausgeblendet oder umverteilt) werden, dass kein Abtrag stattfindet. Mit dieser Maßnahme werden unnötig kleine Einfallswinkel vermieden, die insbesondere im Randbereich der Verteilung auftreten können.

Zur Einstellung des Einfallswinkels können mehrere Laserstrahlen angewandt werden oder es kann mit einer strahlteilenden Optik ein Laserstrahl in mehrere Strahlteile aufgeteilt werden, indem die Teilstrahlen mit unterschiedlichen Fokustiefen eingestellt werden und die Teilstrahlen mit zunehmender Fokustiefe mit einem kleineren Strahlradius und einer größeren Rayleighlänge und/oder einer größeren Leistung eingestellt werden. Eine solche Maßnahme hat den Vorteil, dass die Anfachung auch dann vermieden wird, wenn eine besonders steile Abtragsfront hergestellt werden soll, und sollte dann ergriffen werden, wenn große Werkstücksdicken abgetragen werden oder eine große Verfahrgeschwindigkeit erreicht werden soll. Der größere technische Aufwand, mehrere Laserstrahlen anzuwenden, die z.B. mit mehreren Laserstrahlquellen und damit unabhängig und ohne Phasenbeziehung erzeugt werden, ist vorteilhaft, da eine inkohärente Überlagerung der jeweiligen Wellenfelder nutzbar wird und die gewünschte Einstellmöglichkeit für die beiden Freiheitsgrade Betrag und Richtung der Poyntingvektoren S auf der Abtragsfront erreicht werden kann.

Um die Anfachung zu vermeiden, wenn große Werkstückdicken abgetragen werden und eine große Verfahrgeschwindigkeit erreicht wird, sollte der Einfallswinkel eingestellt werden, indem zusätzlich die Position, der Strahlachse der Teilstrahlen mit zunehmender Fokustiefe monoton entgegen der Abtragsrichtung versetzt eingestellt wird.

Unter Vorgabe, dass die Laserstrahlung einen Betrag $I_0$ f(x) der räumlich variierenden Energiestromdichte mit einem Maximalwert $I_0$ und einer Verteilung f (x) (0<f<1) hat, wird die Verteilung f(x) weniger stark abfallend oder sogar ansteigend auf der Abtragsfront eingestellt, wodurch die Einfallswinkel verkleinert werden. Hierbei sollte vorzugsweise der räumlich mit x abfallende Teil der Verteilung f(x) schwächer abfallend (z.B. verbreiterte Gaußverteilung) eingestellt werden. Hier ist unter Laserstrahlung auch das Zusammenwirken mehrerer Teilstrahlen zu verstehen und die Verteilung beschreibt dann die Superposition mehrerer Teilstrahlen.

Um die Riefenamplitude in dem unteren Teil der Abtragskante weiter zu verkleinern, muss der vordefinierte Bereich, in dem der Einfallswinkel kleiner als der maximal zulässige Wert eingestellt wird, eine größere Entfernung vom Scheitel umfassen. Dies wird erreicht, indem der räumlich mit x abfallende Teil der Verteilung f(x) konstant, also TopHat-förmig, eingestellt wird.

Falls gefordert ist, dass die Riefenamplitude in dem unteren Teil der Abtragsfuge den kleinsten Wert erreicht, dann sollte der vordefinierte Bereich die größte Entfernung vom Scheitel umfassen. Dies wird erreicht, indem die räumliche Verteilung f(x) im Bereich der Abtragsfront räumlich ansteigend und demzufolge ringförmig eingestellt wird.

Die Verteilung f(x) der räumlich variierenden Energiestromdichte kann eingestellt werden, indem ein oder mehrere Axikon(s) zur Strahlformung eingesetzt werden. Die Einstellung kann auch dadurch vorgenommen werden, dass Optiken, die Aberrationen erzeugen, verwendet werden, und die vorstehend erwähnt sind.

Die thermische Emission der heißen Oberfläche des Schmelzfilms im Bereich der Schneidfront und einer gegebenenfalls auftretenden Hinterschneidung und die Reflexionen einer zusätzlichen Beleuchtungsquelle können mit einer Kamera aufgenommen werden, um die Anfachung in axialer Richtung laufender Wellen während der Bearbeitung festzustellen und auszuwerten.

Eine derartige Beleuchtungsquelle wird der Oberkante der Schneidfront zugeordnet und die thermischen Wirkungen eines Vorheizens der Oberfläche des Werkstoffes werden bestimmt, um dann die Position der Abtragsfront an der Oberkante festzustellen. Die so festgestellte Position der Abtragsfront an der Oberkante geht in die Bestimmung des Einfallwinkels ein.

Die Ausdehnung des intensiv leuchtenden Bereiches der Kameraaufnahmen und die Intensität des Messsignals werden.ausgewertet, um die tatsächlich resultierende geometrische Form der Schneidfront zu überwachen, indem sie mit den vor dem Schneiden gemessenen Werten der speziell geformten Laserstrahlung abgeglichen werden, um dadurch die tatsächlich mit der Einstellung erreichten Werte für den Einfallwinkel $\alpha$ sowie zusätzlich die Effizienz der Steuerung zu überwachen.

Im Rahmen der Überwachung kann die thermische Emission der heißen Oberfläche des Schmelzfilms mit einer Photodiode erfasst werden; der intensiv leuchtende Bereich und die Intensität des Messsignals werden auch qualitativ durch ein räumlich gemitteltes Signal der Photodiode erfasst.

Bevorzugte Ausführungsformen des Verfahrens ergeben sich aus den abhängigen Verfahrensansprüchen 2 bis 31.

Bevorzugte Ausführungsformen der Vorrichtung ergeben sich aus den abhängigen Vorrichtungsansprüchen 33 bis 46.

Nachfolgend werden einige allgemeine Betrachtungen, insbesondere zu den gegebenen Geometrien im Bereich des Abtrags an einem Werkstück, sowie Ausführungsbeispiele der erfindungsgemäßen Vorrichtung angegeben, wozu auf die Zeichnungen Bezug genommen wird. In den Zeichnungen zeigt

Figur 1    einen Abtrag entlang einer Abtragslinie I-I in Figur 2, um die geometrischen Gegebenheiten, die bei der Erfindung Berücksichtigung finden, zu erläutern,

Figur 2    eine schematische, perspektivische Darstellung eines Materialstücks, an dem mittels Laserstrahlung unter Materialabtragung eine Abtragskante entlang einer Abtragslinie gebildet ist,

Figur 3    eine Darstellung der Phasenflächen, des Taillenradius eines fokussierten Laserstrahls und dessen Strahlachse anhand eines Gaußstrahls,

Figur 4    eine schematische Darstellung eines Beispiels der erfindungsgemäßen Vorrichtung mit den wesentlichen, optischen Komponenten, wobei das Detail "A" vergrößert dargestellt ist, und

Figur 5    einen gegenüber der Figur 4 geänderten Aufbau der Vorrichtung, bei dem Axikons eingesetzt sind.

Wie erläutert wurde, sollten unnötig große Schwankungen der Abtragsparameter, die über das Maß unvermeidbarer Schwankungen hinausgehen und sich im Riefenbild widerspiegeln, als vermeidbare Schwankungen identifiziert werden und zumindest verkleinert werden.

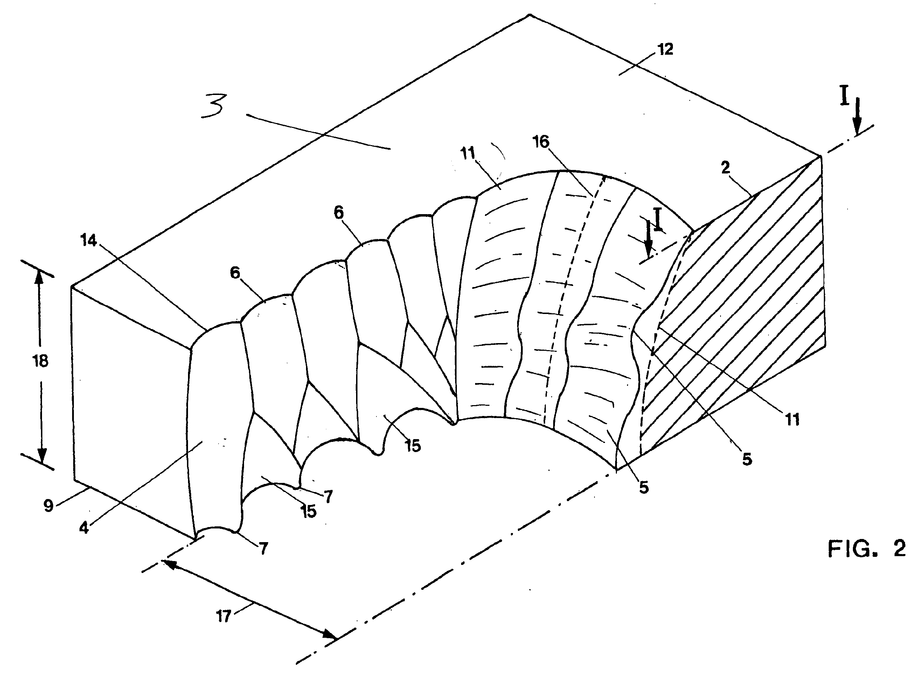

In Figur 2 ist schematisch ein mittels Laserstrahl erzeugter Schnitt 1 entlang einer Abtragslinie I-I (Bezugszeichen 2) in einem Werkstück 3 gezeigt. Ein Abtrag des Materials in dem Schnitt 1 wird durch Aufschmelzen, eventuell auch Verdampfen, des Werkstückmaterials unter Unterstützung eines den Laserstrahl ummantelnden Gasstrahles vorgenommen. Der Gasstrahl kann in Bezug auf das Werkstückmaterial reaktiv oder auch inert sein.

Der Schnitt 1 ist eine Schnittfuge mit zwei Schnittkanten bzw. Abtragskanten 4 (nur eine ist in dem "Halbschnitt" der Figur 2 zu sehen) und einer Abtragsfront 11. Üblicherweise zeigen die Abtragskanten bzw. Schnittkanten 4 mehr oder weniger prägnant ausgeprägte Riefen 6 und eventuell einen Bart 7 an der Schnittunterkante 8 auf der Werkstückunterseite 9.

Riefen 6 und Bart 7 erfordern gegebenenfalls eine Nachbearbeitung und sollten vermieden oder zumindest verringert werden.

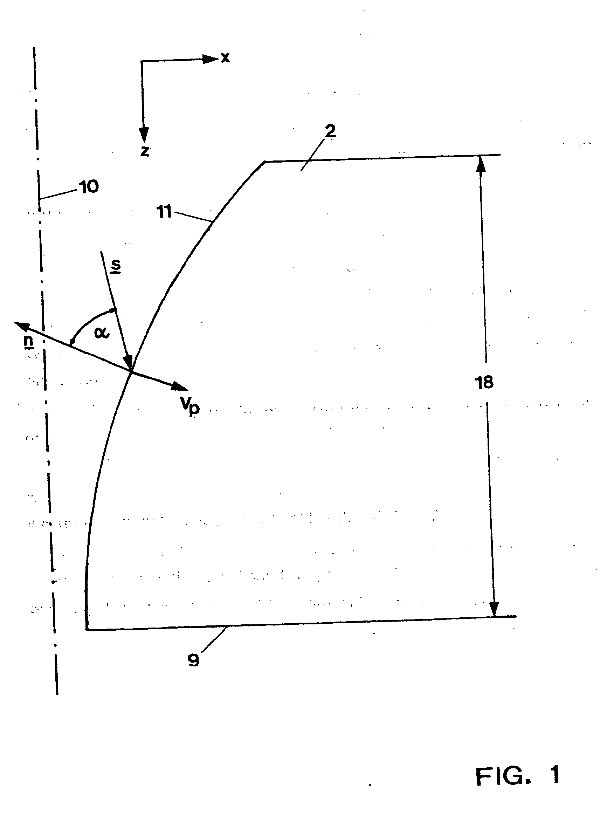

Anhand der Figur 1 werden hierzu einige theoretische Überlegungen vorgenommen, die einen Schnitt entlang einer Abtragslinie I-I in Figur 2 in der Mitte des Schnittes 1 darstellen.

Ein Bruchteil der Teilintensität $\Delta I$ eines Laserstrahls mit der Strahlachse 10 wird absorbiert und schmlzt das Material des Werkstücks 3 auf. Die schmelzflüssige Abtragsfront 11 wird nun mit einer Geschwindigkeit $v_P$ in x-Richtung bewegt. In den angegebenen Koordinaten gibt "z", ausgehend von einer Werkstückoberseite 12, den jeweiligen Auftreffort der Teilintensität $\Delta I$ in der Trenn- bzw. Schnittfuge des Schnitts 1 an. Die Bewegung der schmelzflüssigen Abtragsfront 11, auch als Scheitel bezeichnet, ist damit abhängig von der absorbierten Energiestromdichte $q_A$ des Laserstrahls. Die absorbierte Energiestromdicht $q_A$ ihrerseits ist abhängig vom Einfallswinkel $\alpha$ der Strahlachse 10 des Laserstrahls auf der Abtragsfront 11 und vom Absorptionsgrad A, der von der verwendeten Laserwellenlänge $\lambda$ und vom Kosinus des Einfallswinkels $\alpha$ abhängig ist.

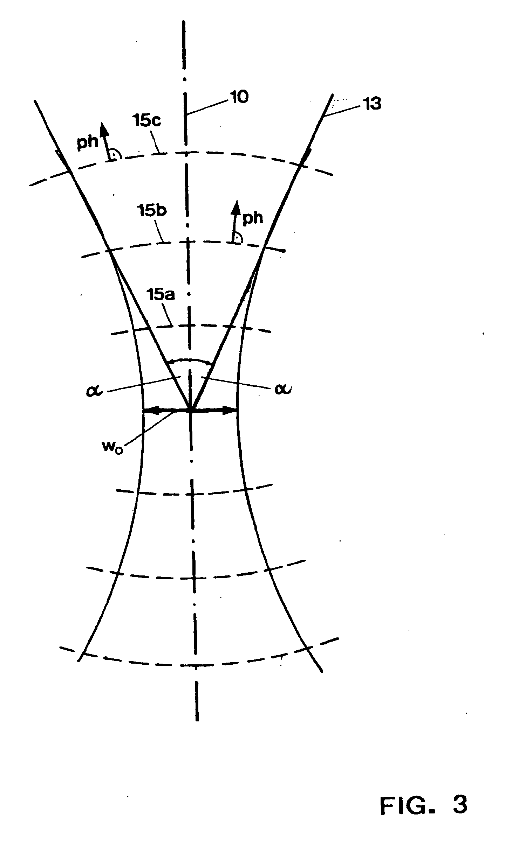

Es ist anzumerken, dass in den nachfolgenden Betrachtungen die Verwendung eines Einfallswinkels $\alpha$ der Laserstrahlachse 10 des fokussierten Laserstrahls 13 nur eine Näherung darstellt. Richtigerweise muss nämlich vom Winkel der Normalen ph auf der jeweiligen Phasenfläche im Laserstrahl (Poyntingvektor) ausgegangen werden (siehe Figur 3).

Einen Zusammenhang zwischen den Phasenflächen 15a, 15b, 15c,..., dem Taillenradius $w_0$ eines fokussierten Laserstrahls 13 und der Strahlachse 10 zeigt nun die Figur 3 anhand des Gaußstrahies 0-ter Ordnung. Gaußstrahlen höherer Ordnung, wie sie oftmals in der Materialbearbeitung verwendet werden, zeigen allerdings nicht mehr diese einfache Darstellung.

Wie wiederum Figur 2 zeigt, sind entlang der Abtrags- bzw. Schneidkante 4 Riefen 6 mit kleinen Riefenamplituden im oberen Teil, d. h. zur Werkstückoberseite 12 hin, zu beobachten und mit dem Bezugszeichen 14 bezeichnet. Im unteren Teil zeigen sich dagegen unter bestimmten Umständen große Riefenamplituden, die mit dem Bezugszeichen 15 bezeichnet sind, d. h. im Bereich zu der Werkstückunterseite 9 hin.

Die Grenze eines vordefinierten Bereichs ist in Figur 2 mit dem Bezugszeichen 16 bezeichnet, wobei es sich bei diesem vordefinierten Bereich um den Bereich handelt, in dem axial laufende Wellen (Bezugszeichen 5) zu beobachten sind, die in der schmelzflüssigen Abtragsfront 11 hervorgerufen werden.

Mit dem Bezugszeichen 17 ist die halbe Breite des mit der Laserstrahlung erzeugten Schnitts 1 angegeben, während das Bezugszeichen 18 die Abtragstiefe bezeichnet.

Wie Figur 1 zeigt, wird der Kosinus $\cos(\alpha)=s*n$ des Einfallwinkels $\alpha$ aus dem Skalarprodukt des Einheitsvektors s des Poyntingvektor $S = I(x) s$ und des Normalenvektors n auf der Absorptionsfront 11 gebildet.

Es wird daran erinnert, dass, wie einleitend ausgeführt ist, die Erkenntnis gewonnen wurde, dass grobe Riefen aufgrund einer inneren Instabilität des Abtragens bzw. Schneidens entstehen. Die Kontrollvariable für den Übergang zur Instabilität bzw. zur Anfachung von Abtragsschwankungen kann angegeben werden. Weiterhin wurde festgestellt, dass Riefen beim Abtragen sowohl mit einem $10\mu$-Strahler als auch mit einem $1\mu$-Strahler aufgrund desselben Mechanismus entstehen.

Riefen entstehen grundsätzlich aufgrund von Schwankungen der Parameter des Schneidens (Laser- und Maschinenparameter), die Schwankungen der Abtragsgeschwindigkeit (Abtragsschwankungen) hervorrufen.

Der Übergang zur Anfachung ist ein Wechsel von gedämpftem Antwortverhalten der Schneidfrontbewegung zur Instabilität bzw. ein nahezu sprunghafter Wechsel von gewünscht kleiner zu unerwünscht großer Sensitivität der Abtragsschwankungen auf äußere Schwankungen der Schneidparameter.

Die physikalische Größe $|dq_A(x, z, t)/dx|$ ist eine Kontrollvariable für den Übergang von gedämpftem Antwortverhalten der Schneidfrontbewegung zur Instabilität. Um die Amplituden der Riefenbildung zu verkleinern wird erfindungsgemäß der Übergang zur Anfachung vermieden. Um den Übergang zur Anfachung zu vermeiden, wird die Kontrollvariable $|dq_A(x, z, t)/dx|$ eingestellt bzw. verkleinert.

Die Kontrollvariable hängt u. a. von dem Absorptionsgrad und damit von der Wellenlänge der Laserstrahlung ab. Der typische Wert der Kontrollvariable ist für den $10\mu$-Strahler um bis zu einem Faktor vier kleiner als beim $1\mu$-Strahler, so dass der Effekt zu großer Einfallswinkel beim technisch und wissenschaftlich besser untersuchten $10\mu$-Strahler nur in technisch uninteressanten Grenzfällen auftreten kann und daher sowohl der Effekt des Übergangs zur Instabilität als auch die Kontrollvariable für den Übergang nicht bekannt sind.

Neu ist, dass die Lösung der konkreten Aufgabenstellung daraus abzuleiten ist, dass nach Überschreiten des Übergangs zur Instabilität eine zu vermeidende, zeitlich schnell variierende Bewegung der Abtragsfront zurück in die stationäre Position aus unvermeidbaren Schwankungen bzw. Abweichungen von der stationären Form der Abtragsfront auftritt. Die Abweichung der Geschwindigkeit $v_p(x, z, t)$ von der Verfahrgeschwindigkeit, die mit dem Betrag der Kontrollvariable monoton anwächst, und damit die Zeitdauer $T_{Relaxation}$, mit der eine unvermeidbare Abweichung der Frontposition in die stationäre Position zurückkehrt, ist wesentlich und die Abtragsparameter werden erfindungsgemäß so eingestellt, dass die Abweichung der Geschwindigkeit $v_p(x, z, t)$ kleine Werte annimmt und damit die Zeitdauer für die Relaxation $T_{Relaxation}$ größer wird als die Zeitdauer $T_{ausstöm}$ für das Ausströmen der Schmelze über die gesamte Schnitttiefe.

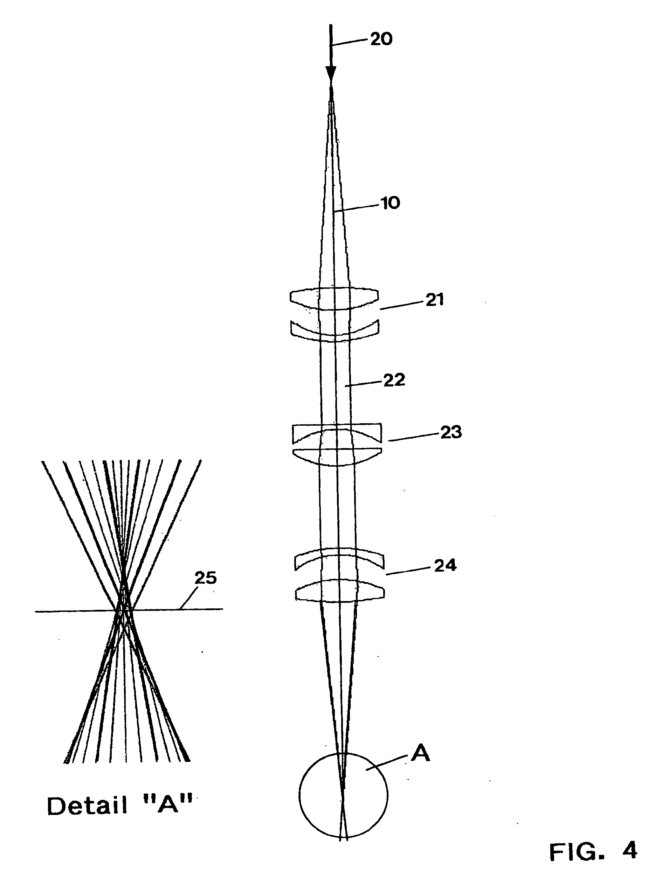

Figur 4 zeigt schematisch eine Vorrichtung, um das beschriebene erfindungsgemäße Verfahren vorzunehmen. Diese Vorrichtung dient dazu, eine Materialabtragung über eine vorgegebene Abtragstiefe zu erreichen.

Die Vorrichtung umfasst als Strahlquelle optional einen Laser mit fasergeführter Laserstrahlung, allgemein mit dem Pfeil 20 angedeutet. Die von dem Laser 20 bzw. der Faseroptik abgegebene Strahlung, wobei die Strahlachse mit dem Bezugszeichen 10 bezeichnet ist, wird über eine Kollimationsoptik 21 kollimiert und der kollimierte Laserstrahl 22 wird einer Aberrationsoptik 23, die in der gezeigten Ausführungsform aus konkav-konvexen Optiken zusammengesetzt ist, zugeführt.

Die von der Aberrationsoptik 23 abgegebene Strahlung wird dann über eine Fokussieroptik 24 auf ein nicht näher dargestelltes Werkstück fokussiert, wobei der Fokussierbereich vergrößert als Detail "A" dargestellt ist. Anhand dieses Details "A" ist der Fokus mit aberriertem Strahl um eine angedeutete Ebene 25 herum zu erkennen.

Diese Kollimations- und Fokussieroptiken 21, 24 können als ein- oder mehrlinsige Systeme ausgeführt werden. Auch kann die Aberrationsoptik 23 aus anderen Kombinationen von Konkav- und Konvexflächen ausgeführt werden und transmissive Optiken könnten auch durch reflektive und/oder diffraktive, aber auch durch diffusive Optiken, ersetzt werden. Auch ist es möglich, Fokussieroptik und/oder Kollimationsoptik und Aberrationsoptik in ein optisches System zusammenzulegen.

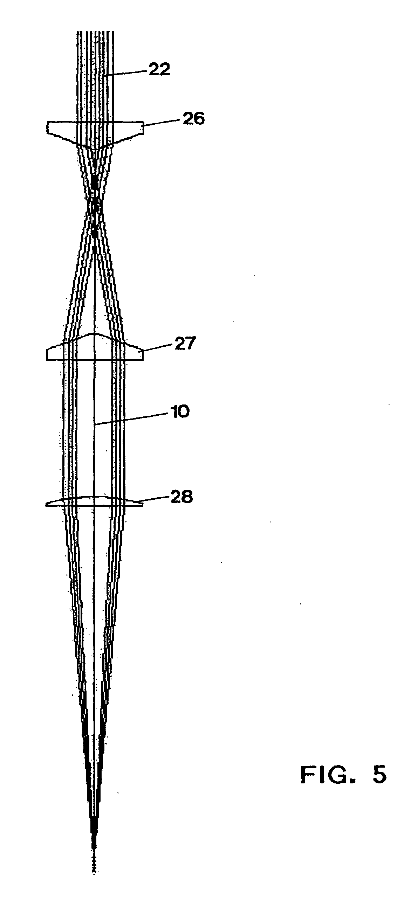

Figur 5 zeigt eine Ausführung, bei der die Aberrationsoptik 23 der Figur 4 durch zwei Axikons 26, 27 aufgebaut ist Diese Axikons besitzen gleiche Winkel der Mantelflächen, die zueinander hinweisend orientiert sind. Die Fokussieroptik 28 der Figur 5 ist durch eine einzelne Linse schematisch dargestellt.

Die Axikons 26, 27 der Aberrationsoptik der Figur 5 können gleiche oder ungleiche Winkel der Mantelflächen, getauschte Orientierungen bezüglich der Ausbreitungsrichtung der Laserstrahlung, haben. Auch können ein Axikon oder mehr als zwei Axikons eingesetzt werden. Weiterhin können Axikons verwendet werden, die gekrümmte Flächen besitzen, oder auch solche, die als reflektive Optiken ausgeführt sind.

**Patentansprüche**

1. Verfahren zur Materialabtragung über eine vorgegebene Abtragstiefe eines Werkstücks (3) mittels Laserstrahl, der aus einem oder mehreren Teilstrahlen besteht, die jeweils eine definierte Strahlachse aufweisen, wobei die Achse des Laserstrahls oder die jeweiligen Achsen der Teilstrahlen gemeinsam entlang einer Abtragslinie (2) mit einer vorgegebenen Verfahrgeschwindigkeit geführt wird und der Laserstrahl eine vorgegebene räumliche einen Poyntingvektor S definierende Energiestromdichte, mit einem Betrag $I_0 f(x)$ und einer Richtung s, aufweist, wobei $I_0$ der maximale Wert der Intensität im Laserstrahl ist, f(x) die räumliche Verteilung der Intensität im Laserstrahl ist und wobei x den Abstand der durch Schwankungen gestörten Abtragsfront (11) von ihrem ungestörten Wert x=0 bezeichnet, wobei die räumliche Energiestromdichte eine Abtragsfront (11), mit einem Scheitel als dem in Abtragsrichtung am weitesten fortgeschrittenen Teil der Abtragsfront (11), erzeugt, mit der eine Abtragskante (4) erzeugt wird, **dadurch gekennzeichnet, dass** die jeweiligen Einfallswinkel $\alpha$ der Abtragsfront (11), die von den Normalenvektoren n auf der Abtragsfront (11) und den Richtungen s der Poyntingvektoren eingeschlossen sind, so eingestellt werden, dass sie einen Maximalwert $\alpha_{max}$ in einem vordefinierten Bereich um einen Scheitel der Abtragsfront (11) nicht übersteigen, wobei das Überschreiten des Maximalwerts $\alpha_{max}$ dadurch erfasst wird, dass ein Wechsel von kleiner Riefenamplitude in einem oberen Teil der Abtragskante (4) zu einer großen Riefenamplitude in einem unteren Teil der Abtragskante (4) auftritt, wobei der Einfallswinkel gegeben ist durch

$$\alpha = \alpha([\underline{s} \cdot \underline{n}])$$

mit $\underline{s}$ = Einheitsvektor in Richtung des Poyntingvektors $\underline{S}$, $|\underline{s}| = 1$
$|\underline{S}|$ = Betrag des Poyntingvektors
$\underline{n}$ = Normalenvektor, $|\underline{n}| = 1$
und wobei weiterhin $\alpha_{max} > \alpha + \Delta\alpha(t)$ gilt und hierbei $\Delta\alpha(t)$ die zeitlichen technisch unvermeidbaren Schwankungen des Einfallswinkels $\alpha$ angibt.

2. Verfahren nach Anspruch 1, **dadurch gekennzeichnet, dass** die Riefenamplitude in dem unteren Teil der Abtragskante (4) verkleinert wird, indem der vordefinierte Bereich eine größere Entfernung vom Scheitel umfasst

3. Verfahren nach Anspruch 1 oder 2, **dadurch gekennzeichnet, dass** die Einfallswinkel $\alpha$ dadurch eingestellt werden, dass mit einer laserintern oder laserextern strahlformenden Optik der Poyntingvektor S auf der Abtragsfront (11) gedreht wird, oder dass die Einfallswinkel $\alpha$ dadurch eingestellt werden, dass mit einer laserintern oder laserextern strahlformenden Optik der Poyntingvektor S auf der Abtragsfront (11) gedreht wird und dass als strahlformende Optik gasförmige und/oder fluide Medien verwendet werden, oder dass die Einfallswinkel $\alpha$ dadurch eingestellt werden, dass mit einer laserintern oder laserextern strahlformenden Optik der Poyntingvektor S auf der Abtragsfront (11) gedreht wird und dass als strahlformende Optik diffraktive, refraktive, reflektierende oder/und streuende Optiken verwendet werden

4. Verfahren nach einem der Ansprüche 1 bis 3, **dadurch gekennzeichnet, dass** die Einfallswinkel $\alpha$ dadurch eingestellt werden, dass die Verteilung des Betrages $I_0 f(x)$ der räumlich variierenden Energiestromdichte mit größerem Durchmesser eingestellt wird.

5. Verfahren nach einem der Ansprüche 1 bis 4, **dadurch gekennzeichnet, dass** bei einem zeitlichen Auftreten von anlagenspezifischen Schwankungen der Einfallswinkel $\alpha$ die verursachenden Schwankungsamplituden der Abtragsparameter verkleinert werden.

**6.** Verfahren nach einem der Ansprüche 1 bis 5, **dadurch gekennzeichnet, dass** als Abtragsparameter Laserleistung, Intensitätsverteilung, Gasdruck und/oder Richtungen und Betrag der Verfahrgeschwindigkeit berücksichtigt werden.

**7.** Verfahren nach einem der Ansprüche 1 bis 6, **dadurch gekennzeichnet, dass** die Einfallswinkel $\alpha$ eingestellt werden, indem der Betrag einer Aberration in einer strahlformenden Optik erzeugt oder vergrößert wird, oder dass die Einfallswinkel $\alpha$ eingestellt werden, indem der Betrag einer Aberration in einer strahlformenden Optik erzeugt oder vergrößert wird und dass als strahlformende Optik gasförmige oder/und fluide Medien verwendet werden, oder dass die Einfallswinkel a eingestellt werden, indem der Betrag einer positiven oder negativen sphärischen Aberration oder einer chromatischen Aberration in einer Optik erzeugt oder vergrößert wird.

**8.** Verfahren nach einem der Ansprüche 1 bis 7, **dadurch gekennzeichnet, dass** die Einstellungen vor und/oder während der Bearbeitung gesteuert oder geregelt zur Anpassung an die Verfahrensparameter, wie beispielsweise Materialart, Materialdicke, Schneidgeschwindigkeit, Laserleistung, vorgenommen werden.

**9.** Verfahren nach einem der Ansprüche 1 bis 8, **dadurch gekennzeichnet, dass** die Laserstrahlung einen Betrag $I_0$ f(x) der räumlich variierenden Energiestromdichte mit einem Maximalwert $I_0$ und einer Verteilung f(x) (0<f<1) hat und der Einfallswinkel $\alpha$ eingestellt wird, indem die Breite der Verteilung f(x) mit der vordefinierten Abtragstiefe monoton ansteigend eingestellt wird.

**10.** Verfahren nach einem der Ansprüche 1 bis 9, **dadurch gekennzeichnet, dass** die Einfallswinkel $\alpha$ eingestellt werden, indem zusätzlich die Position der Strahlachse der einzelnen Laserstrahlen oder Teilstrahlen mit zunehmender Fokustiefe monoton entgegen der Abtragsrichtung versetzt eingestellt wird.

**11.** Verfahren nach einem der Ansprüche 1 bis 10, **dadurch gekennzeichnet, dass** die Laserstrahlung den Betrag $I_0$ f(x) der räumlich variierenden Energiestromdichte mit einem Maximalwert $I_0$ und einer Verteilung f(x) (0<f(x)<1) hat und dass die Verteilung f(x) weniger stark abfallend oder sogar ansteigend auf der Abtragsfront (11) eingestellt wird, so dass df(x)/dx<0 gilt, wobei insbesondere der räumlich mit x abfallende Teil der Verteilung f(x) schwächer abfallend, in Form einer verbreiterten Gaußverteilung, eingestellt wird.

**12.** Verfahren nach Anspruch 11, **dadurch gekennzeichnet, dass** die Verteilung f(x) des Betrages $I_0$f

(x) der räumlich variierenden Energiestromdichte eingestellt wird, indem ein oder mehrere Axikon zur Strahlformung eingesetzt werden.

**13.** Verfahren nach Anspruch 11 oder 12 in Verbindung mit einem der Ansprüche 5 bis 7, **dadurch gekennzeichnet, dass** die Verteilung f(x) des Betrages $I_0$f (x) der räumlich variierenden Energiestromdichte eingestellt wird, indem Optiken, die Aberrationen erzeugen, verwendet werden.

**14.** Vorrichtung zur Durchführung des Verfahrens zur Materialabtragung nach einem der Ansprüche 1 bis 13 mit einer einen Laserstrahl, der aus einem oder mehreren . Teilstrahlen besteht, erzeugenden Einrichtung, wobei der Laserstrahl oder die jeweiligen Teilstrahlen eine definierte Strahlachse aufweisen, und mit Einrichtungen, die so ausgebildet sind, dass die Achse des Laserstrahls oder die jeweiligen Strahlachsen gemeinsam entlang der Abtragslinie (2) mit einer vorgegebenen Verfahrgeschwindigkeit derart führbar sind, dass die räumliche Energiestromdichte eine Abtragsfront (11), mit einem Scheitel als dem in Abtragsrichtung am weitesten fortgeschrittenen Teil der Abtragsfront (11), erzeugt, mit der eine Abtragskante (4) hergestellt wird, und der Laserstrahl so eingestellt ist, dass er eine vorgegebene räumliche einen Poyntingvektor S definierende Energiestromdichte aufweist, **dadurch gekennzeichnet, dass** Einrichtungen vorgesehen und so ausgebildet sind, dass die jeweiligen Einfallswinkel $\alpha$ der Abtragsfront (11), die von den normalen Vektoren n. auf der Abtragsfront (11) und den Richtungen s der Poyntingvektoren eingeschlossen sind, so einstellbar sind, dass sie einen Maximalwert $\alpha_{max}$ in einem vordefinierten Bereich um einen Scheitel der Abtragsfront (11) nicht übersteigen, wobei Einrichtungen vorgesehen und so ausgebildet sind, um den Wechsel von einer kleinen Riefenamplitude in einem oberen Teil der Abtragskante (4) zu einer großen Riefenamplitude in einem unteren Teil der Abtragskante (4) zu erfassen,

wobei der Einfallswinkel $\alpha$ gegeben ist durch

$$\alpha = \alpha([\underline{s} \cdot \underline{n}])$$

mit $\underline{s}$ = Einheitsvektor in Richtung des Poyntingvektors $\underline{S}$ , $|\underline{s}|$ = 1
$|\underline{S}|$ = Betrag des Poyntingvektors
$\underline{n}$ = Normalenvektor, $|\underline{n}|$ = 1
und wobei weiterhin $\alpha_{max}$ > a + $\Delta\alpha$(t) gilt und hierbei $\Delta\alpha$(t) die zeitlichen technisch unvermeidbaren Schwankungen des Einfallswinkels $\alpha$ angibt.

**15.** Vorrichtung nach Anspruch 14, **dadurch gekennzeichnet, dass** Einrichtungen vorgesehen und so ausgebildet sind, dass als Abtragsparameter Laserleistung, Intensitätsverteilung, Gasdruck und/oder Richtungen und Betrag der Verfahrgeschwindigkeit erfassbar und auswertbar sind.

16. Vorrichtung nach Anspruch 14 oder 15, **dadurch gekennzeichnet, dass** eine Aberration in der laserinternen oder laserexternen Optik vergrößernde Einrichtungen vorgesehen sind.

17. Vorrichtung nach einem der Ansprüche 14 bis 16, **dadurch gekennzeichnet, dass** den Einfallswinkel auf dem Scheitel der Abtragsfront (11) einstellende Strahlformungseinrichtung vorgesehen ist, die innerhalb oder außerhalb eines Laserresonators angeordnet ist und einen elliptischen Strahlquerschnitt erzeugt, wobei die große Halbachse in die Richtung der Abtragslinie zeigt.

18. Vorrichtung nach Anspruch 16 oder 17, **dadurch gekennzeichnet, dass** mehrere Laserstrahlen vorgesehen sind oder eine Strahlteilungseinrichtung vorgesehen ist, die den Laserstrahl in mehrere Strahlteile aufteilt, und dass die einzelnen Laserstrahlen oder Teilstrahlen mit unterschiedlichen Fokustiefen eingestellt werden und die einzelnen Laserstrahlen oder Teilstrahlen mit zunehmender Fokustiefe mit einem kleineren Strahlradius und einer größeren Rayleighlänge eingestellt werden.

**Claims**

1. A method for the material removal to a predetermined removal depth from a workpiece (3) by means of a laser beam consisting of one or more sub-beams, each of the latter having a defined beam axis, whereby the axis of the laser beam or the individual axes of the sub-beams are guided along a removal line (2) at a predetermined travelling speed and the laser beam has a predetermined spatial energy flow density that defines a Poynting vector S with a value $I_0 f(x)$ and a direction s, wherein $I_0$ is the maximum value of the intensity in the laser beam, f(x) is the spatial distribution of the intensity in the laser beam and wherein x designates the distance from the removal face (11) disported by the fluctuations from its undistorted value x=0, the spatial energy flow density creating a removal face (11) with an apex formed by the leading part of the removal face (11) in the removal direction and said face creating a removal edge (4), **characterized in that** the respective incident angles $\alpha$ of the removal face (11) included by the normal vectors n of the removal face (11) and the directions s of the Poynting vectors are set in such a way that they do not exceed a maximum value $\alpha_{max}$ in a predefined region around an apex of the removal face (11), whereby exceeding the maximum

value $\alpha_{max}$ is detected in the change from a small gouge amplitude in an upper part of the removal edge (4) to a large gouge amplitude in a lower part of the removal edge (4) wherein the incident angle $\alpha$ is given by:

$$\alpha = \alpha([s \cdot n])$$

with <u>s</u> = unit vector in the direction of the Poynting vector S, |s| = 1
|<u>S</u>| = value of the Poynting vector
<u>n</u> = normal vector, |<u>n</u>| = 1
and wherein $\alpha_{max} > \alpha + \Delta\alpha(t)$ applies and wherein $\Delta\alpha(t)$ are the timely, technically unavoidable fluctuations of the incident angle $\alpha$.

2. A method as set forth in claim 1, **characterized in that** the gouge amplitude in the lower part of the removal edge (4) is reduced by the predefined region comprising a greater distance from the apex.

3. A method as set forth in claim 1 or 2, **characterized in that** the incident angles $\alpha$ are set **in that** the Poynting vector S is rotated on the removal face (11) using a laser-internal or a laser-external beam-shaping optic; or that the incident angles $\alpha$ can be set by rotating the Poynting vector S on the removal face (11) through a laser-internal or laser-external beam-shaping optic and by using gaseous and/or fluid mediums as beam-shaping optics; or that the incident angles $\alpha$ can be set by rotating the Poynting vector S on the removal face (11) through a laser-internal or laser-external beam-shaping optic and by using diffractive, refractive, reflecting or/and dispersive optics as beam-shaping optics.

4. A method as set forth in one of the claims 1 to 3, **characterized in that** the incident angles $\alpha$ can also be set by setting the distribution of the value $I_0 f(x)$ of the spatially varying energy flow density with a greater diameter.

5. A method as set forth in one of the claims 1 to 4, **characterized in that** with a time-related occurrence of system-specific fluctuations of the incident angles $\alpha$, the originating fluctuation amplitude of the removal parameters are reduced.

6. A method as set forth in one of the claims 1 to 5, **characterized in that** laser power, intensity distribution, gas pressure and/or directions and value of the travel speed are considered as removal parameters.

7. A method as set forth in claim 1 to 6, **characterized in that** the incident angles $\alpha$ are set by creating or increasing the value of the aberration in a beam-shaping optic, or that the incident angles $\alpha$ are set by creating or increasing the value of an aberration in a beam-shaping optic and **in that** gaseous and/or fluid mediums are used as the beam-shaping optic, or that the incident angles $\alpha$ are set by creating or increasing the value of a positive or negative spherical aberration or of a chromatic aberration in an optic.

8. A method as set forth in one of the claims 1 to 7, **characterized in that** the adjustments are carried out controlled for the adaptation to the processing parameters such as type of material, material thickness, cutting speed, laser power, before and/or during machining.

9. A method as set forth in one of the claims 1 to 19, **characterized in that** the laser radiation has a value $I_0 f(x)$ of the spatially varying energy flow density with a maximum value $I_0$ and a distribution $f(x)$ $(0<f<1)$ and the incident angle $\alpha$ is set by setting the width of the distribution $f(x)$ with the predefined removal depth monotonously increasing.

10. A method as set forth in claim 1 to 9, **characterized in that** the incident angles $\alpha$ are set by additionally setting the position of the beam axis of the individual laser beams or of the partial beams with an increasing focus depth monotonously offset against the removal direction.

11. A method as set forth in one of the claims 1 to 10, **characterized in that** the laser radiation has a value $I_0 f(x)$ of the spatially varying energy flow density with a maximum value $I_0$ and a distribution $f(x)$ $(0<f(x)<1)$ and that the distribution $f(x)$ is set to decline less severely or even to increase on the removal face (11), so that $df(x)/dx<0$, wherein in particular the spatially with x declining part of the distribution $f(x)$ is set more weakly declining in form of a widened Gaussian distribution.

12. A method as set forth in claim 11, **characterized in that** the distribution $f(x)$ of the value $I_0 f(x)$ of the spatially varying energy flow density is set by using one or more axicons for beam-shaping.

13. A method as set forth in one of claims 11 or 12 in connection with one of the claims 5 to 7, **characterized in that** the distribution $f(x)$ of the value $I_0 f(x)$ of the spatially varying energy flow density is set by using optics that create aberrations.

14. A device for carrying out the method for the material removal as set forth in one of the claims 1 to 13 with a device generating a laser beam consisting of one or more sub-beams, whereby the laser beam or the respective partial beams each have a defined beam axis, and with devices with which the axis of the laser beam or the individual beam axes are guided together along a removal line (2) at a predetermined travelling speed such that the spatial energy flow density creates a removal face (11) with an apex formed by the leading part of the removal face (11) in the removal direction and said face creates a removal edge (4) and that the laser beam is set such that it exhibits a specified spatial energy flow density defining a Poynting vector S, **characterized in that** devices are provided and formed in such a way that the respective incident angles $\alpha$ of the removal face (11) which are included by the normal vectors n on the removal face (11) and the directions s of the Poynting vectors can be set in such a way that they do not exceed a maximum value $\alpha_{max}$ in a predefined region around an apex of the removal face (11), wherein means are provided and formed in such a way to detect the change from a small gouge amplitude in an upper part of the removal edge (4) to a large gouge amplitude in a lower part of the removal edge (4)
wherein the incident angle $\alpha$ is given by:

$$\alpha = \alpha[s \cdot n])$$

with $\underline{s}$ = unit vector in the direction of the Poynting vector $\underline{S}$, $|\underline{s}| = 1$
$|\underline{S}|$ = value of the Poynting vector
$\underline{n}$ = normal vector, $|\underline{n}| = 1$
and wherein $\alpha_{max} > + \Delta\alpha(t)$ applies and wherein $\Delta\alpha(t)$ are the timely, technically unavoidable fluctuations of the incident angle $\alpha$.

15. A device as set forth in claim 14, **characterized in that** devices are provided with which laser power, intensity distribution, gas pressure and/or direction and value of the travel speed can be recorded and evaluated as the removal parameters.

16. A device as set forth in one of the claims 14 or 15, **characterized in that** devices are provided that increase the aberration of the laser-internal or laser-external optics.

17. A device as set forth in one of the claims 14 to 16, **characterized in that** a beam-shaping device is provided that sets the incident angle to the apex of the removal face (11) and is arranged inside or outside of a laser resonator and creates an elliptical beam cross-section, whereby the large half-axis points in the direction of the removal line.

18. A device as set forth in one of the claims 16 or 17, **characterized in that** several laser beams are provided or a beam-splitting device is provided that separates the laser beam into several beam components and **in that** the individual laser beams or partial beams are set to different focus depths and the individual laser beams or the partial beams with an increasing focus depth are set to a smaller beam radius and a greater Raleigh length.

**Revendications**

1. Procédé d'enlèvement de matière sur une profondeur d'enlèvement prédéterminée d'une pièce d'oeuvre (3), au moyen d'un rayon laser, qui est constitué d'un ou de plusieurs rayons partiels présentant respectivement un axe de rayon défini, l'axe du rayon laser ou les axes respectifs des rayons partiels, étant guidés en commun le long d'une ligne d'enlèvement de matière (2) avec une vitesse de déplacement prédéterminée, et le rayon laser présentant un flux d'énergie spatial prédéterminé, qui définit un vecteur de Poynting S avec un module ou une norme $I_0 f(x)$ et une direction s, $I_0$ étant la valeur maximale de l'intensité dans le rayon laser, $f(x)$ étant la distribution spatiale de l'intensité dans le rayon laser, et x désignant la distance d'espacement du front d'enlèvement de matière (11) perturbé par des variations, de sa valeur non perturbée x = 0, le flux d'énergie spatial produisant un front d'enlèvement de matière (11) avec un sommet en tant que partie la plus avancée dans la direction d'enlèvement de matière du front d'enlèvement de matière (11), avec lequel est produit un bord d'enlèvement de matière (4),
**caractérisé en ce que** les angles d'incidence $\alpha$ respectifs du front d'enlèvement de matière (11), qui sont formés par les vecteurs de normale n sur le front d'enlèvement de matière (11) et les directions s des vecteurs de Poynting, sont réglés de manière à ne pas dépasser une valeur maximale $\alpha_{max}$ dans une zone prédéfinie autour d'un sommet du front d'enlèvement de matière (11), le dépassement de la valeur maximale $\alpha_{max}$ étant relevé par le fait qu'il apparaît un passage d'une faible amplitude de strie dans une partie supérieure du bord d'enlèvement de matière (4) à une grande amplitude de strie dans une partie inférieure du bord d'enlèvement de matière (4), l'angle d'incidence étant donné par

$$\alpha = \alpha[\underline{s} \cdot \underline{n}])$$

avec $\underline{s}$ = vecteur unitaire dans la direction du vecteur de Poynting $\underline{S}$, $|\underline{s}| = 1$
$|\underline{S}|$ = module du vecteur de Poynting
$\underline{n}$ = vecteur de normale, $|\underline{n}| = 1$
et l'on a par ailleurs la relation $\alpha_{max} > \alpha + \Delta\alpha(t)$, $\Delta\alpha$

(t) indiquant ici les variations dans le temps, techniquement inévitables, de l'angle d'incidence $\alpha$

2. Procédé selon la revendication 1, **caractérisé en ce que** l'amplitude de strie dans la partie inférieure du bord d'enlèvement de matière (4) est rendue plus faible grâce au fait que ladite zone prédéfinie présente un éloignement plus grand du sommet.

3. Procédé selon la revendication 1 ou la revendication 2, **caractérisé en ce que** les angles d'incidence $\alpha$ sont réglés en faisant tourner le vecteur de Poynting $\underline{S}$ sur le front d'enlèvement de matière (11) à l'aide d'une optique de formation de rayon interne au laser ou externe au laser, ou bien **en ce que** les angles d'incidence $\alpha$ sont réglés en faisant tourner le vecteur de Poynting $\underline{S}$ sur le front d'enlèvement de matière (11) à l'aide d'une optique de formation de rayon interne au laser ou externe au laser, et en utilisant en guise d'optique de formation de rayon, des milieux gazeux et/ou fluides, ou en ce que les angles d'incidence $\alpha$ sont réglés en faisant tourner le vecteur de Poynting $\underline{S}$ sur le front d'enlèvement de matière (11) à l'aide d'une optique de formation de rayon interne au laser ou externe au laser, et en utilisant en guise d'optique de formation de rayon, des optiques diffractives, réfractives, réflectives ou/et dispersives.

4. Procédé selon l'une des revendications 1 à 3, **caractérisé en ce que** les angles d'incidence $\alpha$ sont réglés grâce au fait que la répartition du module $I_0 f$ (x) du flux d'énergie variant spatialement, est réglée avec un diamètre plus grand.

5. Procédé selon l'une des revendications 1 à 4, **caractérisé en ce que** lors de l'apparition temporelle de variations des angles d'incidence $\alpha$, spécifiques à l'installation, on diminue les amplitudes de variation des paramètres d'enlèvement de matière, qui les produisent.

6. Procédé selon l'une des revendications 1 à 5, **caractérisé en ce que** les paramètres d'enlèvement de matière pris en considération sont la puissance du laser, la distribution de l'intensité, la pression de gaz et/ou des directions et la valeur de la vitesse de déplacement.

7. Procédé selon l'une des revendications 1 à 6, **caractérisé en ce que** les angles d'incidence $\alpha$ sont réglés en produisant ou en augmentant la valeur d'une aberration dans une optique de formation de rayon, ou bien **en ce que** les angles d'incidence $\alpha$ sont réglés en produisant ou en augmentant la valeur d'une aberration dans une optique de formation de rayon et en utilisant en guise d'optique de formation de rayon, des milieux gazeux et/ou fluides, ou **en ce**

**que** les angles d'incidence $\alpha$ sont réglés en produisant ou en augmentant la valeur d'une aberration sphérique positive ou négative ou d'une aberration chromatique dans une optique.

8. Procédé selon l'une des revendications 1 à 7, **caractérisé en ce que** les réglages sont effectués avant et/ou pendant l'usinage en étant commandés ou régulés pour l'adaptation aux paramètres de procédé comme par exemple, le type de matière, l'épaisseur de matière, la vitesse de coupe, la puissance du laser.

9. Procédé selon l'une des revendications 1 à 8, **caractérisé en ce que** le rayonnement laser présente un module $I_0 f(x)$ du flux d'énergie variant spatialement, avec une valeur maximale $I_0$ et une distribution $f(x)$ $(0<f<1)$, et l'angle d'incidence $\alpha$ est réglé en réglant la largeur de la distribution $f(x)$ de manière monotonement croissante avec la profondeur prédéfinie d'enlèvement de matière.

10. Procédé selon l'une des revendications 1 à 9, **caractérisé en ce que** les angles d'incidence $\alpha$ sont réglés en réglant, en plus, la position de l'axe de rayon des rayons lasers individuels ou rayons partiels, de manière monotonement décalée à l'encontre de la direction d'enlèvement de matière, pour une profondeur de focalisation croissante.

11. Procédé selon l'une des revendications 1 à 10, **caractérisé en ce que** le rayonnement laser présente un module $I_0 f(x)$ du flux d'énergie variant spatialement, avec une valeur maximale $I_0$ et une distribution $f(x)$ $(0<f(x)<1)$, et **en ce que** la distribution $f(x)$ est réglée moins fortement décroissante ou même croissante sur le front d'enlèvement de matière (11), de manière à avoir $df(x)/dx < 0$, la partie de la distribution $f(x)$ décroissant spatialement avec x étant notamment réglée moins fortement décroissante sous la forme d'une distribution de Gauss élargie.

12. Procédé selon la revendication 11, **caractérisé en ce que** la distribution $f(x)$ du module $I_0 f(x)$ du flux d'énergie variant spatialement est réglée en utilisant un ou plusieurs axicons.

13. Procédé selon la revendication 11 ou la revendication 12, en combinaison avec l'une des revendications 5 à 7, **caractérisé en ce que** la distribution $f(x)$ du module $I_0 f(x)$ du flux d'énergie variant spatialement est réglée en utilisant des optiques produisant des aberrations.

14. Installation pour la mise en oeuvre du procédé d'enlèvement de matière selon l'une des revendications 1 à 13, comprenant un dispositif produisant un rayon laser, qui est constitué d'un ou de plusieurs rayons partiels, le rayon laser ou les rayons partiels respectifs présentant un axe de rayon défini, et comprenant des dispositifs qui sont réalisés de manière à ce que l'axe du rayon laser ou les axes respectifs des rayons partiels, puissent être guidés en commun le long d'une ligne d'enlèvement de matière (2) avec une vitesse de déplacement prédéterminée, de sorte que le flux d'énergie spatial produit un front d'enlèvement de matière (11) avec un sommet en tant que partie la plus avancée dans la direction d'enlèvement de matière, du front d'enlèvement de matière (11), avec lequel est produit un bord d'enlèvement de matière (4), et le rayon laser étant réglé de façon à présenter un flux d'énergie spatial prédéterminé, qui définit un vecteur de Poynting S, **caractérisée en ce que** des dispositifs sont prévus et conçus pour que les angles d'incidence $\alpha$ respectifs du front d'enlèvement de matière (11), qui sont formés par les vecteurs de normale n sur le front d'enlèvement de matière (11) et les directions s des vecteurs de Poynting, puissent être réglés de manière à ne pas dépasser une valeur maximale $\alpha_{max}$ dans une zone prédéfinie autour d'un sommet du front d'enlèvement de matière (11), des dispositifs étant prévus et conçus pour relever un passage d'une faible amplitude de strie dans une partie supérieure du bord d'enlèvement de matière (4) à une grande amplitude de strie dans une partie inférieure du bord d'enlèvement de matière (4), l'angle d'incidence $\alpha$ étant donné par

$$\alpha = \alpha[\underline{s} \cdot \underline{n}])$$

avec $\underline{s}$ = vecteur unitaire dans la direction du vecteur de Poynting $\underline{S}$, $|\underline{s}| = 1$
$|\underline{S}|$ = module du vecteur de Poynting
$\underline{n}$ = vecteur de normale, $|\underline{n}| = 1$
et l'on a par ailleurs la relation $\alpha_{max} > \alpha + \Delta\alpha(t)$, et $\Delta\alpha(t)$ indiquant ici les variations dans le temps, techniquement inévitables, de l'angle d'incidence $\alpha$.

15. Installation selon la revendication 14, **caractérisé en ce que** des dispositifs sont prévus et conçus pour pouvoir relever et exploiter, en tant que paramètres d'enlèvement de matière la puissance du laser, la distribution de l'intensité, la pression de gaz et/ou des directions et la valeur de la vitesse de déplacement.

16. Installation selon la revendication 14 ou la revendication 15, **caractérisé en ce que** sont prévus des dispositifs d'augmentation d'une aberration de l'optique interne au laser ou externe au laser.

17. Installation selon l'une des revendications 14 à 16, **caractérisé en ce qu'**il est prévu un dispositif de formation de rayon réglant l'angle d'incidence sur le sommet du front d'enlèvement de matière (11), qui est agencé à l'intérieur ou à l'extérieur du résonateur de laser, et produit une section transversale de rayon de forme elliptique, le grand demi-axe étant orienté dans la direction de la ligne d'enlèvement de matière.

18. Installation selon la revendication 16 ou la revendication 17, **caractérisé en ce que** sont prévus plusieurs rayons laser ou **en ce qu'**il est prévu un dispositif diviseur de rayon, qui subdivise le rayon laser en plusieurs parties de rayon, et **en ce que** les rayons laser individuels ou rayons partiels sont réglés avec une profondeur de focalisation différente, et les rayons laser individuels ou rayons partiels sont réglés, pour une profondeur de focalisation croissante, avec un rayon plus faible du rayon laser et une longueur de Rayleigh plus grande.

FIG. 1

FIG. 2

FIG. 3

Detail "A"

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933825 A
- US 5286947 A
- EP 0200089 A
- US 2004084427 A1